# EUROPÄISCHE PATENTSCHRIFT

(11) **EP 2 478 195 B1**
(45) Veröffentlichungstag und Bekanntmachung des Hinweises auf die Patenterteilung: **17.06.2015**
(21) Anmeldenummer: 10739889.3
(22) Anmeldetag: 29.07.2010
(51) Int. Cl.: F01N 3/20

(54) **DOSIERMODUL FÜR EIN FLÜSSIGES REDUKTIONSMITTEL**
METERING MODULE FOR A LIQUID REDUCING AGENT
MODULE DE DOSAGE POUR RÉDUCTEUR LIQUIDE

(30) Priorität: 15.09.2009 DE 102009029473
(43) Veröffentlichungstag der Anmeldung: 25.07.2012
(73) Patentinhaber: Robert Bosch GmbH, 70442 Stuttgart (DE)
(72) Erfinder: FEISTRITZER, Bernhard, A-5452 Pfarrwerfen (AT); FOETSCHL, Markus, A-5580 Unternberg (AT); PAPE, Werner, 70839 Gerlingen (DE)
(86) Internationale Anmeldenummer: PCT/EP2010/061000
(87) Internationale Veröffentlichungsnummer: WO 2011/032767

(56) Entgegenhaltungen:
- WO-A1-02/079616
- WO-A1-2006/108419
- DE-A1-102006 037 123
- DE-A1-102007 020 965

## Beschreibung

Die Erfindung betrifft ein Dosiermodul für ein flüssiges Reduktionsmittel, insbesondere einer Harnstoff-Wasser-Lösung, zum Mischen des Reduktionsmittels mit einem Gas, insbesondere Luft, zur weiteren Einleitung in ein Abgasrohr einer Brennkraftmaschine. Das Dosiermodul umfasst dabei ein Dosierventil mit einem Leitrohr, ein Druckluftkanal und eine Mischkammer.

### Stand der Technik

Die vom Gesetzgeber geforderten Emissionsgrenzwerte für Stickoxide erfordern bei Kraftfahrzeugen Abgasnachbehandlungseinrichtungen, die bspw. eine selektive katalytische Reduktion (SCR) der in den Rohemissionen der Brennkraftmaschine enthaltenen Stickoxide vornehmen. Dieses sogenannte SCR-Verfahren zur Abgasreinigung ist aus dem Stand der Technik bekannt.

Aus der DE 102006037123A1 ist eine Vorrichtung zum Zumessen eines Reduktionsmittels in eine Abgasleitung bekannt, bei der ein Reduktionsmittel in eine Mischkammer eingeleitet wird und dort mittels Druckluft zerstäubt wird.

Ein weiteres Beispiel einer solchen Abgasnachbehandlungseinrichtung ist aus der WO 02 / 079616 A1 bekannt. Dort wird in einem Dosiermodul unter Verwendung eines in die Abgase einzubringenden Reduktionsmittels, vorzugsweise einer Harnstoff-Wasser-Lösung, über ein Dosierventil das flüssige Reduktionsmittel und zusätzlich Druckluft in eine Mischkammer eingebracht. In der Mischkammer entsteht daraus ein Reduktionsmittel-Luft-Gemisch, welches in das Abgasrohr eingebracht wird.

Das Dosiermodul umfasst das Dosierventil und die Mischkammer, wobei die Mischkammer üblicherweise in einem Gehäuse aus korrosionsbeständigem Stahl angeordnet ist, in welchem eine Profildichtung aus einem Elastomer, bspw. "Fluor-Silikon" eingesetzt ist. Die Dichtung dient als Rückschlagventil, so dass die Druckluft in die Mischkammer gelangen kann, aber möglichst keine Harnstoff-Wasser-Lösung in den Druckluftbereich gelangen kann. Diese Abgrenzung ist notwendig, da einerseits bei einer Trocknung der Harnstoff-Wasser-Lösung Harnstoffkristalle abgeschieden werden können, welche zu einer Verstopfung einer Druckluftleitung führen können und andererseits die Harnstoff-Wasser-Lösung durch eine mögliche Abspaltung von Ammoniak auf Teile im Luftsystem stark korrosiv wirken kann.

Außerdem können sich im Betrieb durch spritzende Harnstoff-Wasser-Lösung Harnstoffkristalle an einer Außenseite des Leitrohrs am Auslassbereich bilden. Diese Harnstoffkristalle können durch Harnstoff-Wasser-Lösung wieder aufgelöst werden. Wenn dies nicht erfolgt, wachsen die Harnstoffkristalle in weiterer Folge entlang des Leitrohres in Richtung Profildichtung und können im Laufe der Zeit wesentliche Teile eines Ausgleichsbereichs ausfüllen. Damit wird der Widerstand für die einströmende Luft derart erhöht, dass es zu einem Ausfall des Systems kommen kann.

### Offenbarung der Erfindung

Aufgabe der Erfindung ist es, ein Dosiermodul der eingangs genannten Art weiterzuentwickeln, bei dem ein Kristallisieren des Harnstoffs an der Außenseite des Leitrohrs verhindert wird. Gleichzeitig sollen die Zuverlässigkeit und Lebensdauer des Dosiermoduls erhöht werden.

Die Aufgabe wird erfindungsgemäß dadurch gelöst, dass eine Austrittsöffnung des Leitrohrs für das Reduktionsmittel zu einer Mittelachse des Dosiermoduls beabstandet in der Mischkammer angeordnet ist. Dadurch kann bspw. die Austrittsöffnung für das Reduktionsmittel in der Nähe einer Innenwand der Mischkammer liegen oberhalb eines Mischkammerbodens und/oder in der Nähe einer Innenwand der Mischkammer liegen, wodurch die eingespritzte Harnstoff-Wasser-Lösung eine Mischkammeroberfläche möglichst vollständig benetzen kann, wo entsprechende Adhäsionskräfte wirken können. Der Erfindung liegt die Idee zu Grunde, einen möglichen Bereich zum Auskristallisieren der Harnstoffkristalle durch eine geeignete Geometrie der Vorrichtung durchgehend oder zumindest in kurzen Zeitabständen mit Harnstoff-Wasser-Lösung benetzt zu halten, so dass ein Auskristallisieren, zumindest im kritischen Bereich der Austrittsöffnung am freien Ende des Leitrohres und im kritischen Bereich einer Lufteintrittsöffnung, nicht möglich ist und eventuell gebildete Kristalle rasch wieder aufgelöst werden. Das Auskristallisieren ist nur nach einer Trocknung der Harnstoff-Wasser-Lösung möglich. Außerdem kann durch eine geeignete Ausgestaltung des Leitrohrs sowie die Einbaulage des Dosiermoduls ein möglichst großer Bereich in der Mischkammer dauernd, zumindest aber in kurzen Zeitabständen, mit Harnstoff-Wasser-Lösung benetzt werden. Die Erfindung ist damit kostengünstig und stellt einen zuverlässigen Betrieb des Dosiermoduls sicher, da die grundsätzliche Funktion des Dosiermoduls unverändert bleibt. Besonders wird die Lebensdauer des Dosiermoduls erhöht, da das Volumen der Mischkammer nicht mehr im Laufe der Zeit durch die Kristallbildung verringert und/oder die Funktion der Profildichtung nicht mehr durch Kristallbildung beeinträchtigt wird.

Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf jeweils explizit hingewiesen wird. Vorteilhafte Weiterbildungen finden sich in den Unteransprüchen.

Vorteilhaft für die Erfindung ist, wenn das Leitrohr zumindest im Bereich des Austritts des Reduktionsmittels gegenüber der Mittelachse des Dosiermoduls abgewinkelt ist. Damit ist die Austrittsöffnung nahe an der Innenwand der Mischkammer positioniert. Dadurch wird die eingespritzte Harnstoff-Wasser-Lösung bspw. am Mischkammerboden reflektiert, womit die gesamte Innenfläche der Mischkammer benetzt wird. Dies kann noch dadurch unterstützt werden, dass das Leitrohr aus Teflon oder einem anderen Flourkunststoff, also aus einem Material mit einer sehr niedrigen Oberflächenspannung, hergestellt ist und dass das Leitrohr zur Austrittsöffnung hin konisch geöffnet ausgestaltet ist. Durch die Vergrößerung der Austrittsöffnung kann größerer Bereich der Mischkammer durch Harnstoff-Wasser-Lösung benetzt werden. Wird eine Buchse zur Führung des Leitrohrs zusammen mit dem Leitrohr aus Teflon oder einem anderen Fluorkunststoff mit einer sehr niedrigen Oberflächenspannung hergestellt, so wird eine Wanderung der Harnstoff-Wasser-Lösung durch Kriechvorgänge in den Lufteintrittsbereich wirksam verhindert. Eine Beschichtung lediglich der Innenfläche und/oder der Außenfläche der Buchse mit Teflon oder einem anderen Flourkunststoff ist auch möglich.

Alternativ dazu ist es möglich, dass das Leitrohr am freien Ende wannenförmig verschlossen ist und eine seitliche Austrittsöffnung für das Reduktionsmittel aufweist. Hierbei kann zumindest ein Teil des Leitrohrs zu einer Innenwand der Mischkammer hin versetzt sein und die angeordnete Austrittsöffnung in Richtung der Innenwand zeigt. Die vom Dosiermodul eingespritzte Harnstoff-Wasser-Lösung wird am wannenförmigen Ende des Leitrohrs umgelenkt und über die seitliche Austrittsöffnung über die gesamte Mischkammer verteilt, deren Oberfläche damit vollständig benetzt wird.

Ist die Mischkammer direkt über der ins Abgasrohr führende Dosierleitung konisch ausgestaltet, wird dadurch vorteilhafterweise auch sichergestellt, dass immer die gesamte Harnstoff-Wasser-Lösung aus der Mischkammer in die Dosierleitung abfließen kann.

Zur Verhinderung einer Ansammlung von gespritzter Harnstoff-Wasser-Lösung bspw. im Druckluftkanal des Dosiermoduls wird vorgeschlagen, dass ein Durchmesser des Druckluftkanals kleiner als ein Durchmessers des Leitrohrs ist. Das Leitrohr sollte mindestens um den Faktor 1,1 größer als der Durchmesser des Druckluftkanals sein. Vorteilhaft dabei ist auch, wenn der Druckluftkanal zusätzlich in der Mitte verjüngt ist. Der Druckluftkanal soll mit einem so geringen Durchmesser ausgeführt sein, dass einerseits ein Widerstand für die Luftströmung keinen negativen Einfluss auf die Systemfunktion des Dosiermoduls hat und andererseits die Luftströmung in dem Kanal so hoch ist, dass mögliche Kristalle oder anhaftende Harnstoff-Wasser-Lösung im Luftkanal ausgeblasen werden können. Die Verjüngung im Druckluftkanal unterstützt diese Wirkung. Wird der Luftkanal aus Teflon oder einem anderen Fluorkunststoff hergestellt, so wird eine Wanderung durch Kriechvorgänge von Harnstoff-Wasser-Lösung in den Bereich des Lufteinlasses verhindert.

In einer anderen Ausführungsform des Dosiermoduls ist besonders vorteilhaft, wenn der Druckluftkanal ein Rückschlagventil, Insbesondere ein federbelastetes Kugelventil, umfasst. Das Rückschlagventil kann dabei in einem seitlichen Lufteinlassbereich im Gehäuse des Dosiermoduls vorgesehen sein und hat die Aufgabe, ein Austausch von Gasen im Stillstand des Systems zwischen dem Innern des Dosierventils und dem äußeren Druckluftsystem zu verhindern. Der Lufteinlass kann dabei direkt oberhalb einer Verschraubung des Dosiermoduls angeordnet sein, so dass vorteilhafterweise auf die bisher übliche Profildichtung mit der als Rückschlagventil wirkende Dichtlippe verzichtet werden kann. Es kann zudem auch auf die diskrete Mischkammer verzichtet oder diese zumindest stark verkleinert werden, da das Harnstoff/Wasser-Luft-Gemisch auch im Bereich des Leitrohrs gebildet werden kann. Dies reduziert die Baulänge des Dosiermoduls erheblich und spart - auch durch eine einfachere Fertigung - zusätzlich Herstellungskosten.

Wenn in dieser Ausführungsform die Buchse, in der das Leitrohr geführt wird, derart ausgeführt wird, dass diese die Harnstoff-Wasser-Lösung bis zur Verschraubung fernhält, kann für das Gehäuse des Dosiermoduls auch ein preiswerterer Werkstoff als bisher üblich verwendet werden (z.B. Aluminiumlegierungen oder Kunststoff), da dieser nicht gegenüber der aggressiven Harnstoff-Wasser-Lösung beständig sein muss. Auch dies reduziert die Herstellungskosten.

Das Verhindern des Auskristallisierens von Harnstoff-Wasser-lösung im Dosiermodul wird weiter gefördert, wenn beim Ausschalten des Systems die Mischkammer entlüftet wird. Während des Ausschaltens des Systems wird das Dosierventil und ein in der Leitung zwischen der Harnstoff-Wasser-Lösung und dem Dosiermodul befindliches Entlüftungsventil zur Absenkung eines Mischkammerdrucks auf einen Umgebungsdruck für eine ausreichende Zeit geöffnet. Das Dosierventil kann auch außerhalb des Dosiermoduls angeordnet sein. Bei der Absenkung des Mischkammerdrucks werden dabei Reste der Harnstoff-Wasser-Lösung in der Dosierleitung in das Leitrohr gedrückt und über das Dosierventil aus dem Dosiermodul entfernt. Dies kann durch eine Änderung der Software zur Steuerung des Dosiermoduls erreicht werden.

### Kurzbeschreibung der Figuren

Nachfolgend werden anhand der Figuren Ausführungsbeispiele der Erfindung beispielhaft erläutert. Es zeigen:
- Figur 1: eine schematische Darstellung einer Brennkraftmaschine mit einer Abgasnachbehandlungseinrichtung;
- Figur 2: ein erfindungsgemäßes Dosiermodul in einem Vertikalschnitt in einer ersten Ausführungsform;
- Figur 3: ein erfindungsgemäßes Dosiermodul in einem Vertikalschnitt in einer zweiten Ausführungsform; und
- Figur 4: ein erfindungsgemäßes Dosiermodul in einem Vertikalschnitt in einer dritten Ausführungsform.

### Detaillierte Beschreibung

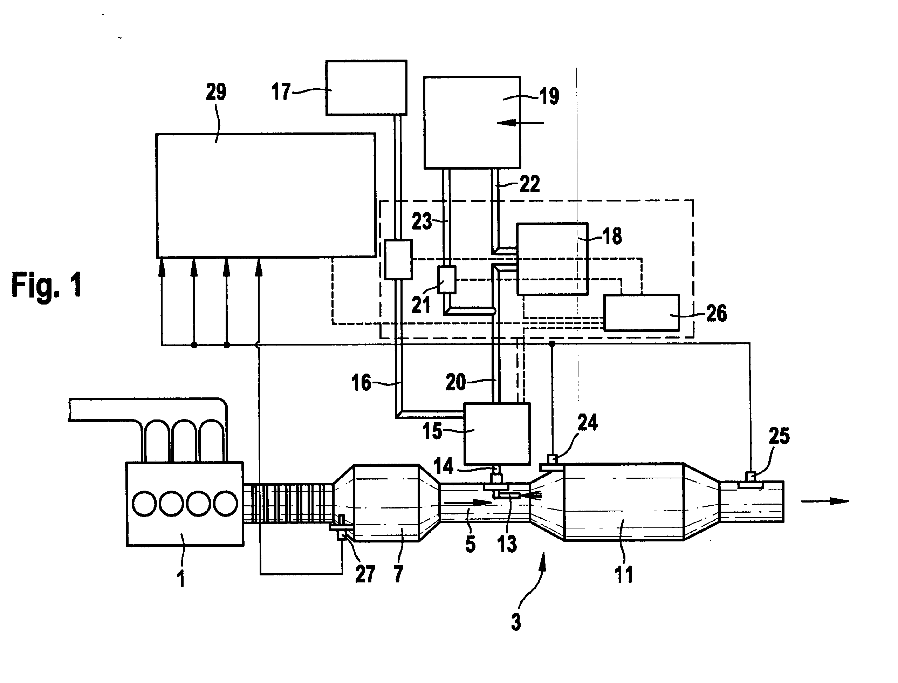

In Figur 1 ist eine Brennkraftmaschine 1 mit einer Abgasnachbehandlungseinrichtung 3 stark vereinfacht und schematisch dargestellt. Die Abgasnachbehandlungseinrichtung 3 umfasst ein Abgasrohr 5, einen Oxidationskatalysator 7 und einen SCR-Katalysator 11. Nicht dargestellt ist ein Partikelfilter, der üblicherweise stromabwärts des Oxidationskatalysators 7 angeordnet wird. Die Strömungsrichtung des Abgases durch das Abgasrohr 5 ist durch Pfeile (ohne Bezugszeichen) angedeutet.

Um den SCR-Katalysator 11 mit einem Reduktionsmittel, z.B. einer Harnstoff-Wasser-Lösung oder einem andere reduktionsmittel zu versorgen, ist stromaufwärts des SCR-Katalysators 11 am Abgasrohr 5 ein Sprührohr 13 für die Harnstoff-Wasser-Lösung angeordnet. Das Sprührohr 13 spritzt bei Bedarf mittels Druckluft die Harnstoff-Wasser-Lösung stromaufwärts des SCR-Katalysators 11 in das Abgasrohr 5 ein. Das Sprührohr 13 ist über eine Dosierleitung 14 mit dem Dosiermodul 15 verbunden. Dazu ist an dem Dosiermodul 15 eine Druckleitung 16 zum Zuführen von Druckluft von einer Drucklufterzeugungseinheit 17 oder einem Druckluftbehälter vorgesehen.

Das gesamte Dosiersystem umfasst neben dem Sprührohr 13, der Dosierleitung 14, dem Dosiermodul 15, eine Dosierpumpe 18 sowie einen Speicherbehälter 19 für die Harnstoff-Wasser-Lösung. Zwischen der Dosierpumpe 18 und dem Dosiermodul 15 ist eine erste Leitung (Reduktionsmittelzuführleitung) 20 vorgesehen. Das Dosiersystem umfasst zusätzlich ein Entlüftungsventil 21. Das Entlüftungsventil 21 kann auch im Dosiermoduls 15 integriert sein. Zwischen dem Speicherbehälter 19 und der Dosierpumpe 18 ist eine zweite Leitung 22 vorgesehen.

Von der ersten Leitung 20 zweigt eine Rücklaufleitung 23 mit dem Entlüftungsventil 21 ab. Über die Rücklaufleitung 23 wird überschüssige Harnstoff-Wasser-Lösung in den Speicherbehälter 19 zurückgeführt. Selbstverständlich könnte die Rücklaufleitung 23 auch vom Dosiermodul 15 oder der Dosierpumpe 18 abzweigen.

Der Vollständigkeit halber sei noch auf die in der Abgasanlage angeordneten Sensoren, nämlich einen Stickoxid-Sensor 25, sowie Temperatur-Sensoren 24 und 27 hingewiesen. Diese Sensoren 24, 25 und 27 sind über Signalleitungen (ohne Bezugszeichen) mit einem Steuergerät 29 der Brennkraftmaschine 1 verbunden. Das Steuergerät 29 steuert die Brennkraftmaschine 1 und sendet und empfängt Daten von dem Steuergerät 26 des Dosiersystems. Die Signalverbindungen von und zum Steuergerät 26 des Dosiersystems sind in Figur 1 durch gestichelte Linien dargestellt.

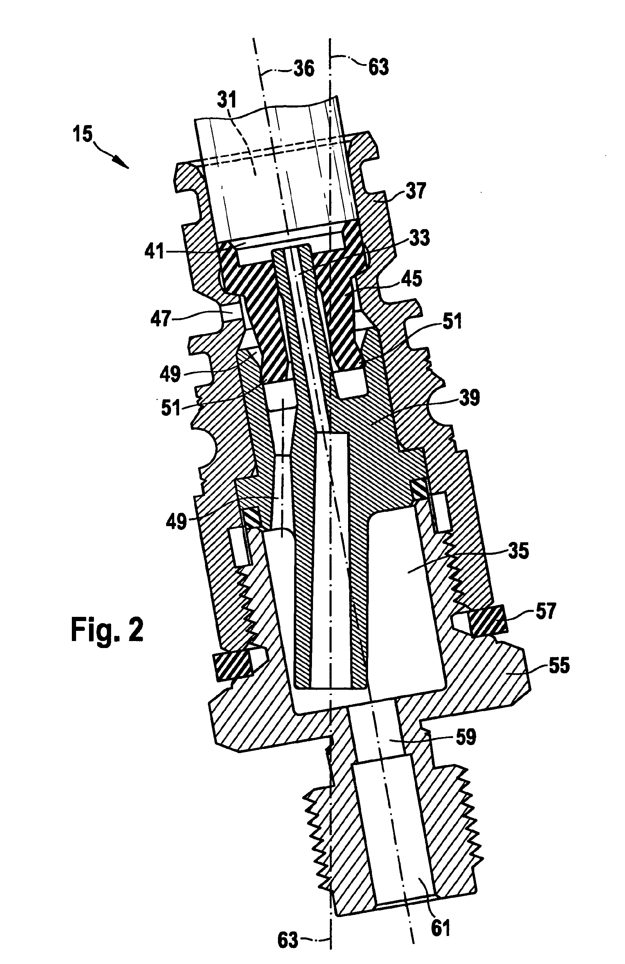

Figur 2 zeigt das Dosiermodul 15 in einer ersten erfindungsgemäßen Ausführungsform in einem Längsschnitt. Das erfindungsgemäße Dosiermodul 15 umfasst im Wesentlichen ein Dosierventil 31, ein Leitrohr 33 und eine Mischkammer 35. Das Dosierventil 31 wird vom Steuergerät 26 gesteuert. Passive, druckbetätigte Dosierventile (nicht dargestellt) sind allerdings auch im Einsatz. Das Dosierventil 31 ist in Figur 2 von oben in ein Gehäuse 37 des Dosiermoduls 15 eingelassen. Das Leitrohr 33 folgt zunächst einer Mittelachse 36 des Dosierventils 31, bis der Verlauf in Figur 2 nach links abgewinkelt wird, so dass das freie Ende des Leitrohrs 33 nahe einer inneren Seitenwand der Mischkammer 35 endet. Dabei vergrößert sich der Durchmesser des Leitrohrs 33 zunächst plötzlich, um sich dann in Flussrichtung nochmals konisch weiter zu öffnen. Das Leitrohr 33 ist Teil einer Buchse 39 und aus Teflon oder einem anderen Flourkunststoff hergestellt. Nach einem Einbau des Dosiermoduls 15 in ein Kraftfahrzeug soll das Dosiermodul 15 bevorzugt derart positioniert sein, dass eine Mittelachse 63 des abgewinkelten Teils des Leitrohrs 33 im Wesentlichen in vertikaler Richtung verläuft.

Das Leitrohr 33 liegt an einem Auslass 41 des Dosierventils an. Das Leitrohr 33 bzw. die Buchse 39 befindet sich in einer Mittenbohrung der Profildichtung 45 im Gehäuse 37, wobei das Leitrohr 33 mit samt einem Teil der Buchse 39 aus der Profildichtung 45 heraus in die Mischkammer 35 hineinragt.

Im Bereich der Profildichtung 45 ist ein Anschluss 47 für die Luft-Druckleitung 16 (siehe Fig. 1) vorgesehen. Zwischen der Profildichtung 45 und dem Gehäuse 37 ist ein Luftkanal 49 für die einströmende Druckluft angeordnet. Die Profildichtung 45 weist in Figur 2 am unteren Ende eine elastische Dichtlippe 51 auf, die den Luftkanal 49 verschließt, also an einer inneren Oberfläche des Gehäuse 37 anliegt. Die Dichtlippe 51 ist dabei derart ausgestaltet, dass die Dichtlippe 51 entgegen einer Strömungsrichtung der Druckluft einen spitzen Winkel aufweist. Dadurch hat die Dichtlippe 51 die Funktion eines Rückschlagventils. Hinter der Dichtlippe 51 führt der Luftkanal 49 weiter bis in die Mischkammer 35. Dieser Bereich des Luftkanals 49 ist in der Mitte zusätzlich verjüngt.

Das Gehäuse 37 ist in Strömungsrichtung mit einer Verschraubung 55 verschlossen. Ein Dichtring 57 sorgt für die nötige Abdichtung der Verbindungsstelle. Die Verschraubung 55 weist mittig eine Bohrung 59 auf, die eine Verlängerung der Mischkammer 35 darstellt und an einem unteren Ende in Figur 2 in einer Dosierleitung 61 für die Harnstoff-Wasser-Lösung mündet.

Das Dosiermodul 15 in der ersten Ausführungsform (gemäß Figur 2) funktioniert folgendermaßen:
Die Harnstoff-Wasser-Lösung wird von dem Speicherbehälter 19 über die Dosierpumpe 18 dem Dosiermodul 15 zugeführt. Das Dosierventil 31 dosiert die gewünschte Menge an Harnstoff-Wasser-Lösung im Dosiermodul 15. Die Einspritzmenge an Harnstoff-Wasser-Lösung gelangt über das abgewinkelte Leitrohr 33 in Figur 2 in die linke Ecke der Mischkammer 35. Da die Harnstoff-Wasser-Lösung mit einem Druck zwischen 1,5 und 5 bar in das Leitrohr 33 eingespritzt wird, wird diese am Boden der Mischkammer 35 reflektiert und damit die gesamte Innenfläche der Mischkammer 35 benetzt. Dadurch werden eventuell in der Mischkammer 35 vorhandene Harnstoffkristalle wieder aufgelöst.

Gleichzeitig wird Druckluft über die Druckleitung 16 zum Anschluss 47 des Dosiermoduls 15 gefördert. Die Druckluft gelangt in den Luftkanal 49 und öffnet bei Überschreiten einer definierten Druckdifferenz zwischen Luftkanal 49 und Mischkammer 35 die Dichtlippe 51. Damit gelangt die Druckluft in die Mischkammer 35. Dort vermischen sich Druckluft und Reduktionsmittel und gelangen in die Dosierleitung 61 und von dort in das Abgasrohr 5.

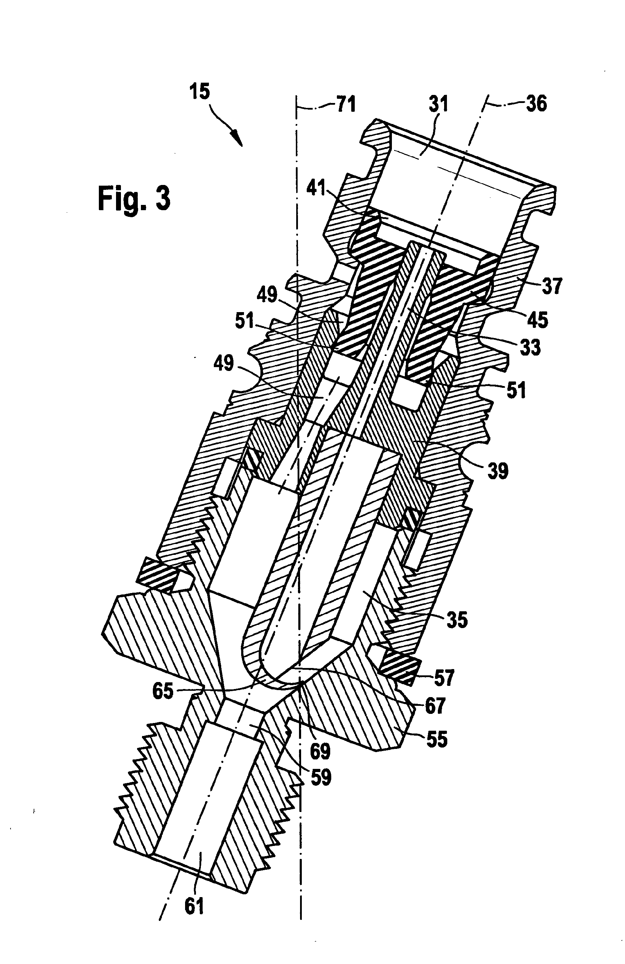

Figur 3 zeigt das Dosiermodul 15 in einer zweiten Ausführungsform in einem Vertikalschnitt. Dabei und für die nächstfolgende Figur gilt, dass solche Elemente und Bereiche, welche funktionsäquivalent sind zu Elementen und Bereichen des Dosiermoduls 15 von Figur 2, die gleichen Bezugszeichen tragen und nicht nochmals im Detail erläutert werden. Wesentlicher Unterschied zum Dosiermodul 15 aus Figur 2 ist die Ausgestaltung und Führung des Leitrohrs 33, insbesondere der Teil des Leitrohrs 33 mit der Ausgangsöffnung für die Harnstoff-Wasser-Lösung. Der zum Auslass 41 gerichtete Bereich des Leitrohrs 33 ist identisch ausgestaltet wie in Figur 2 und wird wie in Figur 2 in der Buchse 39 geführt. Der in Figur 3 untere Teil des Leitrohrs 33 ist - von Figur 2 abweichend - nach einem Absatz im Durchmesser nach links vergrößert; das Leitrohr 33 läuft aber in der gleichen Richtung weiter. Es bildet sich also in diesem Bereich - bezogen auf die Mittelachse 36 des Dosiermoduls 15 - eine asymmetrische Anordnung des unteren Teils des Leitrohrs 33. Das Leitrohr 33 ist am freien Ende durch einen wannenförmigen Verschluss 65 axial verschlossen, weist aber seitlich, oberhalb des wannenförmigen Verschlusses 65 eine Austrittsöffnung 67 für die Harnstoff-Wasser-Lösung auf. Ein Auslauf des wannenförmigen Verschlusses 65, der als eine Nase 69 ausgestaltet ist, liegt dabei an einer konisch zulaufenden Innenwand der Mischkammer 35 innerhalb der Verschraubung 55 an.

Das Dosiermodul 15 in der zweiten Ausführungsform (gemäß Figur 3) funktioniert folgendermaßen:
Die Harnstoff-Wasser-Lösung gelangt über den gleichen Weg, wie in Figur 2 beschrieben in das Leitrohr 33. Dabei fließt die Harnstoff-Wasser-Lösung zunächst durch den engen Teil des Leitrohrs 33 und anschließend in den breiten Teil des Leitrohrs 33 bis die Harnstoff-Wasser-Lösung den wannenförmigen Verschluss 65 am freien Ende des Leitrohrs 33 erreicht. Dort wird die Harnstoff-Wasser-Lösung um ca. 120° umgelenkt und tritt anschließend durch die Austrittöffnung 67 in die Mischkammer 35 aus. Durch die Umlenkung der Harnstoff-Wasser-Lösung zusammen mit der hohen Geschwindigkeit wird die gesamte Innenfläche der Mischkammer 35 benetzt. Durch eine bevorzugte schräge Einbaulage des Dosiermoduls 15 im Kraftfahrzeug wird sichergestellt, dass der wannenförmige Verschluss 65 immer in die Mischkammer 35 entleert wird (vgl. Bezugszeichen 71). Hier wird, wie zu Figur 2 beschrieben, die Harnstoff-Wasser-Lösung mit Druckluft gemischt. Die schräge Ausgestaltung der Innenwand der Mischkammer 35 bewirkt zusätzlich, dass die gesamte mit Druckluft angereicherte Harnstoff-Wasser-Lösung abschließend in die Dosierleitung 61 zum Abgasrohr 5 abfließen kann. Dabei werden auch große Bereiche der Mischkammer 35 benetzt.

Beiden Ausführungsbeispielen ist gemeinsam, dass große teile der Mischkammer permanent oder in kurzen Zeitabständen mit flüssigem reduktionsmittel benetzt werden, so dass die Ausbildung von Kristallen unterdrückt und eventuell vorhandene Kristalle aufgelöst werden.

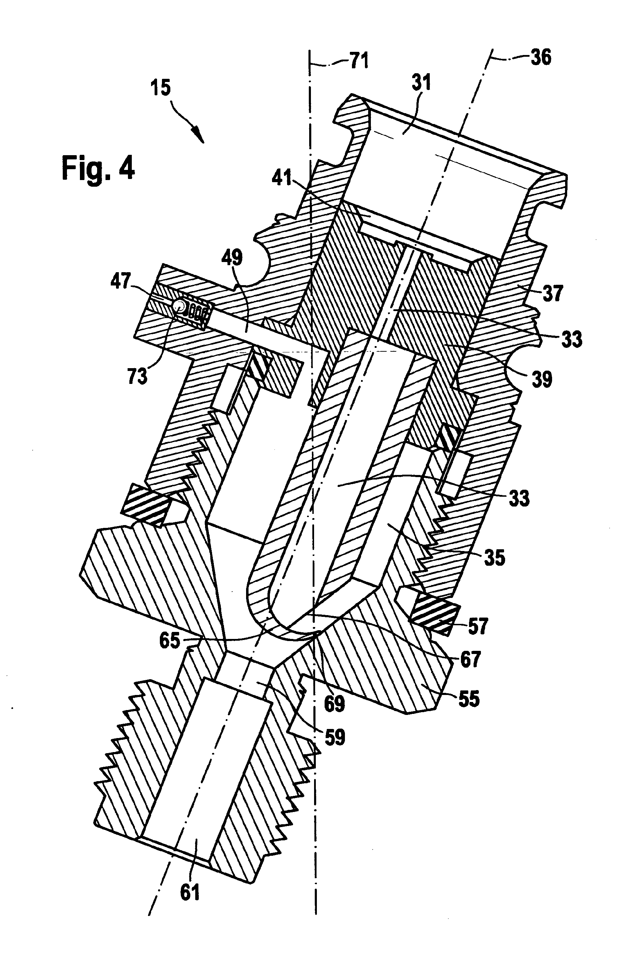

Figur 4 zeigt das Dosiermodul 15 in einer dritten Ausführungsform in einem Vertikalschnitt. In dem hier dargestellten Dosiermodul 15 kann auf die Profildichtung 45 verzichtet werden, da der Luftkanal 49 weiter in Richtung der Dosierleitung 61, also zum Auslass für die Harnstoff-Wasser-Lösung aus dem Dosiermodul 15 versetzt ist. In dem Luftkanal 49 ist ein Rückschlagventil 73 angeordnet. Durch den Verzicht auf die Profildichtung hat das Dosiermodul 15 eine geringere Baulänge. Ansonsten entspricht die Ausführungsform von Figur 4 der Ausführungsform von Figur 3.

Das Dosiermodul 15 in der dritten Ausführungsform (gemäß Figur 4) funktioniert folgendermaßen:
Die Harnstoff-Wasser-Lösung gelangt über den gleichen Weg, wie in Figur 3 beschrieben in das Leitrohr 33, wobei in Figur 4 der enge Teil des Leitrohrs 33 stark verkürzt ist. Die Harnstoff-Wasser-Lösung erreicht anschließend den wannenförmigen Verschluss 65 am freien Ende des Leitrohrs 33. Druckluft gelangt über den Druckluft-Anschluss 47 in den Luftkanal 49; das im Luftkanal 49 angeordnete Rückschlagventil 73 ist in Lufteinlassrichtung offen. Das Luft/Harnstoff-Wasser-Gemisch kann sich nun im Bereich des wannenförmigen Verschlusses 65 bis hin zur Dosierleitung 61 bilden. Alle weiteren Vorgänge sind mit denen zu Figur 3 beschriebenen Vorgängen identisch. Das Rückschlagventil 73 hat hier die Aufgabe, ein Austausch von Gasen im Stillstand des Systems zwischen dem Innern des Dosierventils 15 und dem äußeren Druckluftsystem (nicht dargestellt) zu verhindern. Ansonsten wirkt das Rückschlagventil 73 wie die Dichtlippe 51 in den Ausführungsbeispielen in Figur 2 und 3. Auch die Druckverhältnisse innerhalb des Dosiermoduls 15 und die Dosiermenge des Dosiermoduls 15 sind unverändert.

## Patentansprüche

1. Dosiermodul (15) für ein flüssiges Reduktionsmittel, insbesondere einer Harnstoff-Wasser-Lösung, zum Mischen des Reduktionsmittels mit einem Gas, insbesondere Luft, zur weiteren Einleitung in ein Abgasrohr (5) einer Brennkraftmaschine (1), wobei das Dosiermodul (15) ein Dosierventil (31) mit einem Leitrohr (33), ein Druckluftkanal (49) und eine Mischkammer (35) umfasst, **dadurch gekennzeichnet, dass** eine Austrittsöffnung des Leitrohrs (33) für das Reduktionsmittel zu einer Mittelachse des Dosiermoduls (36) beabstandet in der Mischkammer (35) angeordnet ist.

2. Dosiermodul (15) nach Anspruch 1, **dadurch gekennzeichnet, dass** das Leitrohr (33) zumindest im Bereich eines Austritts des Reduktionsmittels relativ zu der Mittelachse des Dosiermoduls (36) abgewinkelt ist.

3. Dosiermodul (15) nach Anspruch 1, **dadurch gekennzeichnet, dass** das Leitrohr (33) am freien Ende wannenförmig verschlossen ist und eine seitliche Austrittsöffnung (67) für das Reduktionsmittel aufweist.

4. Dosiermodul (15) nach einem der vorhergehenden Ansprüche, **dadurch gekennzeichnet, dass** dieangeordnete Austrittsöffnung (67) in Richtung einer Innenwand der Mischkammer (35) zeigt.

5. Dosiermodul (15) nach einem der vorhergehenden Ansprüche, **dadurch gekennzeichnet, dass** ein Durchmesser des Druckluftkanals (49) kleiner als ein Durchmessers des Leitrohrs (33) ist.

6. Dosiermodul (15) nach Anspruch 5, **dadurch gekennzeichnet, dass** der Durchmesser des Leitrohrs (33) mindestens um den Faktor 1,1 größer als der Durchmesser des Druckluftkanals (49) ist.

7. Dosiermodul (15) nach Anspruch 5 oder 6, **dadurch gekennzeichnet, dass** der Druckluftkanal (49) in der Mitte verjüngt ist.

8. Dosiermodul (15) nach einem der Ansprüche 5 bis 7, **dadurch gekennzeichnet, dass** der Druckluftkanal (49) ein Rückschlagventil (73). Insbesondere ein federbelastetes Kugelventil, umfasst.

9. Dosiermodul (15) nach einem der vorhergehenden Ansprüche, **dadurch gekennzeichnet, dass** beim Ausschalten des Systems die Mischkammer (33) entlüftet wird.

## Claims

1. Dosing module (15) for a liquid reducing agent, in particular a urea-water solution, for mixing the reducing agent with a gas, in particular air, for onward introduction into an exhaust pipe (5) of an internal combustion engine (1), the dosing module (15) comprising a dosing valve (31) with a guide tube (33), comprising a compressed-air duct (49) and comprising a mixing chamber (35), **characterized in that** an outlet opening of the guide tube (33) for the reducing agent is arranged in the mixing chamber (35) so as to be spaced apart from a central axis of the dosing module (36).

2. Dosing module (15) according to Claim 1, **characterized in that** the guide tube (33) is angled relative to the central axis of the dosing module (36) at least in the region of an outlet for the reducing agent.

3. Dosing module (15) according to Claim 1, **characterized in that** the guide tube (33) is closed off in the manner of a trough at the free end and has a lateral outlet opening (67) for the reducing agent.

4. Dosing module (15) according to one of the preceding claims, **characterized in that** the arranged outlet opening (67) points in the direction of an inner wall of the mixing chamber (35).

5. Dosing module (15) according to one of the preceding claims, **characterized in that** a diameter of the compressed-air duct (49) is smaller than a diameter of the guide tube (33).

6. Dosing module (15) according to Claim 5, **characterized in that** the diameter of the guide tube (33) is larger than the diameter of the compressed-air duct (49) by at least the factor 1.1.

7. Dosing module (15) according to Claim 5 or 6, **characterized in that** the compressed-air duct (49) is narrowed in the middle.

8. Dosing module (15) according to one of Claims 5 to 7, **characterized in that** the compressed-air duct (49) comprises a check valve (73), in particular a spring-loaded ball valve.

9. Dosing module (15) according to one of the preceding claims, **characterized in that** the mixing chamber (33) is deaerated when the system is switched off.

## Revendications

1. Module de dosage (15) pour un agent réducteur fluide, en particulier une solution d'urée et d'eau, pour mélanger l'agent réducteur avec un gaz, en particulier de l'air, en vue de son introduction ultérieure dans un tuyau de gaz d'échappement (5) d'un moteur à combustion interne (1), le module de dosage (15) comprenant une soupape de dosage (31) avec un tube de guidage (33), un canal d'air sous pression (49) et une chambre de mélange (35), **caractérisé en ce qu'**une ouverture de sortie du tube de guidage (33) pour l'agent réducteur est disposée dans la chambre de mélange (35) à distance d'un axe médian du module de dosage (36).

2. Module de dosage (15) selon la revendication 1, **caractérisé en ce que** le tube de guidage (33), au moins dans la région d'une sortie de l'agent réducteur, est coudé par rapport à l'axe médian du module de dosage (36).

3. Module de dosage (15) selon la revendication 1, **caractérisé en ce que** le tube de guidage (33) est fermé en forme de cuvette à l'extrémité libre et présente une ouverture de sortie latérale (67) pour l'agent réducteur.

4. Module de dosage (15) selon l'une quelconque des revendications précédentes, **caractérisé en ce que** l'ouverture de sortie disposée (67) est tournée dans la direction d'une paroi interne de la chambre de mélange (35).

5. Module de dosage (15) selon l'une quelconque des revendications précédentes, **caractérisé en ce qu'**un diamètre du canal d'air sous pression (49) est inférieur à un diamètre du tube de guidage (33).

6. Module de dosage (15) selon la revendication 5, **caractérisé en ce que** le diamètre du tube de guidage (33) est supérieur au moins d'un facteur 1,1 au diamètre du canal d'air sous pression (49).

7. Module de dosage (15) selon la revendication 5 ou 6, **caractérisé en ce que** le canal d'air sous pression (49) se rétrécit au milieu.

8. Module de dosage (15) selon l'une quelconque des revendications 5 à 7, **caractérisé en ce que** le canal d'air sous pression (49) comprend un clapet anti-retour (73), en particulier une soupape sphérique sollicitée par ressort.

9. Module de dosage (15) selon l'une quelconque des revendications précédentes, **caractérisé en ce que** lors de la déconnexion du système, la chambre de mélange (33) est désaérée.
